(19) Europäisches Patentamt
European Patent Office
Office européen des brevets

(11) **EP 4 148 300 A1**

(12) **EUROPÄISCHE PATENTANMELDUNG**

(43) Veröffentlichungstag:
**15.03.2023  Patentblatt 2023/11**

(21) Anmeldenummer: **22193044.9**

(22) Anmeldetag: **31.08.2022**

(51) Internationale Patentklassifikation (IPC):
***F16H 48/00*** *(2006.01)*    ***B60K 23/04*** *(2006.01)*

(52) Gemeinsame Patentklassifikation (CPC):
**F16H 48/00; B60K 23/04;** B60K 17/16; F16H 48/10

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **10.09.2021  DE 102021210040**

(71) Anmelder: **Magna PT B.V. & Co. KG
74199 Untergruppenbach (DE)**

(72) Erfinder: **PLITT, Dennis
69437 Neckargerach (DE)**

(74) Vertreter: **Zangger, Bernd
Magna International Europe GmbH
Patentabteilung
Liebenauer Hauptstraße 317
8041 Graz (AT)**

(54) **VERFAHREN ZUM SCHUTZ EINES DIFFERENTIALS**

(57)    Ein Verfahren zum Schutz eines Differentials (1) eines Kraftfahrzeuges, wobei durch das Differential (1) ein Antriebsmoment auf zwei Abtriebe aufgeteilt wird, wobei fortlaufend zumindest eine Temperatur ($T_{KP}$, $T_G$) am Differential (1) aus einem Temperaturmodell (TM) berechnet wird, wobei falls die berechnete Temperatur ($T_{KP}$, $T_G$) einen festgelegten Grenzwert überschreitet, das Antriebsmoment abgesenkt wird.

**Fig. 2b**

EP 4 148 300 A1

**Beschreibung**

**Gebiet der Erfindung**

Die vorliegende Erfindung betrifft ein Verfahren zum Schutz eines Differentials eines Kraftfahrzeuges.

**Stand der Technik**

Differentialgetriebe, kurz "Differentiale", werden bekannterweise in Kraftfahrzeugen eingesetzt, um ein Antriebsdrehmoment auf zwei Abtriebe aufzuteilen, beispielsweise auf linke und rechte Halbachsen einer Vorder- oder Hinterachse des Kraftfahrzeuges als sog. "Achsdifferential". Derartige Differentiale können "offen" ausgeführt sein, das heißt durchgängig einen Drehzahlunterschied der beiden Abtriebe ermöglichen, oder als Sperrdifferential ausgeführt sein, so dass die Drehzahlen der beiden Abtriebe vollständig oder teilweise aneinandergekoppelt sind.

Es ist bekannt, dass offene Differentiale bei zu hohen Drehzahlen Schaden nehmen können, so dass hierfür ein Drehzahlschutz eingesetzt werden kann, der bei Auftreten einer zu hohen Drehzahl an einem Abtrieb des Differentials eingreift.

**Zusammenfassung der Erfindung**

Es ist eine Aufgabe der Erfindung, ein Verfahren zum Schutz eines Differentials eines Kraftfahrzeuges anzugeben, dass einen zuverlässigen Schutz des Differentials vor Überlastung bereitstellt und dabei auch für ein Sperrdifferential einsetzbar ist.

Die Lösung der Aufgabe erfolgt durch ein Verfahren zum Schutz eines Differentials eines Kraftfahrzeuges, wobei durch das Differential ein Antriebsmoment auf zwei Abtriebe aufgeteilt wird, wobei fortlaufend zumindest eine Temperatur am Differential aus einem Temperaturmodell berechnet wird, wobei falls die berechnete Temperatur einen festgelegten Grenzwert überschreitet, das Antriebsmoment abgesenkt wird.

Erfindungsgemäß erfolgt eine beständige Bestimmung der aktuellen Last auf das Differential durch eine Berechnung auf Basis eines Temperaturmodells. Für die Berechnung auf Basis dieses Modells werden die erforderlichen Eingangsparameter laufend ermittelt, insbesondere über Sensoren. Erfindungsgemäß wird somit die Temperatur am Differential, auf Basis des Berechnungsmodells, berücksichtigt, um die Belastung des Differentials durch hohe Temperaturen zu ermitteln und erforderlichenfalls eine Reduktion des Antriebsmoments am Differential vorzunehmen.

Das Verfahren wird bevorzugt von einem Steuergerät, insbesondere von einer Getriebesteuerung durchgeführt.

Das Antriebsmoment kann insbesondere durch Verringerung eines Motormoments abgesenkt werden und/oder durch Zuschalten eines Allradbetriebes des Kraftfahrzeuges und/oder durch einen Bremseingriff und / oder durch Zuschalten einer elektrisch angetriebenen Achse.

Das Differential ist bevorzugt ein Sperrdifferential.

Das Differential ist bevorzugt ein Achsdifferential.

Vorzugsweise umfasst die fortlaufende Berechnung zumindest einer Temperatur am Differential aus einem Temperaturmodell die fortlaufende Berechnung einer Temperatur an einem Reibkontakt von Differential-Zahnrädern, insbesondere von Planetenrädern, zum Gehäuse des Differentials.

Bevorzugt umfasst die fortlaufende Berechnung zumindest einer Temperatur am Differential aus einem Temperaturmodell die fortlaufende Berechnung einer Temperatur am Gehäuse des Differentials umfasst.

Besonders bevorzugt umfasst die fortlaufende Berechnung zumindest einer Temperatur am Differential beide genannten Bereiche, nämlich einen Reibkontakt von Differential-Zahnrädern, insbesondere von Planetenrädern, zum Gehäuse, sowie auch am Gehäuse selbst.

Durch das Temperaturmodell wird bevorzugt ständig die Temperatur am Gehäuse des Differentials und am Reibkontakt der Planetenräder zum Gehäuse berechnet. Der Reibkontakt zwischen Gehäuse und Planeten ist eine kritische Stelle. Der Reibkontakt zwischen Planeten und Gehäuse ist ein lokaler Punkt mit kleiner Masse, wohingegen das Gehäuse eine große Masse besitzt. Bei einem Energieeintrag steigt die Temperatur an der kritischen Stelle wesentlich schneller an, als beim Gehäuse. Die kritische Stelle kühlt schneller ab, je größer der Unterschied der Temperatur zwischen kritischer Stelle und Gehäuse. Das Gehäuse gibt die Energie dann üblicherweise an ein Öl und/oder das restliche Getriebesystem ab. Eine Abhängigkeit von einer Sumpföltemperatur, Rotationsgeschwindigkeit des Abtriebes, sowie der Volumenstrom einer Kühlungspumpe zum Abkühlverhalten kann vom Temperaturmodel berücksichtigt werden.

Wenn die Temperatur eine vordefinierte Schwelle übersteigt, wird das Antriebsmoment abgesenkt, so dass nur noch ein geringer Leistungseintrag in das Differential erfolgt. Das Differential kühlt ab und wird vor Hitzeschäden (Fresser / Pittings) geschützt.

Die Reaktion auf die berechnete Temperatur, insbesondere die Momentenabsenkung oder Momentenerhöhung, kann auch steigungsabhängig erfolgen, also das aktuelle Befahren einer Steigung berücksichtigen.

Die aktuelle Berechnung der Temperatur an einem Reibkontakt von Differential-Zahnrädern, insbesondere von Planetenrädern, zum Gehäuse des Differentials, wird bevorzugt abhängig von der zuletzt berechneten Temperatur am Gehäuse des Differentials durchgeführt.

Zudem wird bevorzugt die aktuelle Berechnung der Temperatur am Gehäuse des Differentials, abhängig von der zuletzt berechneten Temperatur an einem Reibkontakt von Differential-Zahnrädern, insbesondere von Planetenrädern, zum Gehäuse des Differentials durchgeführt.

Die Berechnungen der Temperatur am Reibkontakt von Planetenrädern zum Gehäuse einerseits und am Gehäuse selbst andererseits, erfolgen bevorzugt voneinander abhängig, so dass die Ergebnisse der jeweiligen Rechnung in die nächste Berechnung der anderen Temperaturgröße eingehen.

Bevorzugt wird zudem fortlaufend zumindest eine Leistung am Differential aus einem Leistungsmodell berechnet, wobei falls die berechnete Leistung einen Grenzwert überschreitet, das Antriebsmoment abgesenkt wird, so dass auch in diesem Fall nur noch ein geringer Leistungseintrag in das Differential erfolgt. Der Grenzwert kann abhängig von der Neigung der Fahrbahn, also Steigung der Fahrbahn, und der Zeitdauer sein.

Die Grenzwerte der Leistungsberechnung können steigungsabhängig sein, da die Achslastverteilung bei Befahren einer Steigung unterschiedlich ist und dementsprechend auch das mögliche absetzbare Drehmoment und das Aufbauverhalten der Differenzdrehzahl.

Die Grenzwerte der Leistungsberechnung können zeitabhängig und steigungsabhängig sein, da die Achslastverteilung bei Befahren einer Steigung unterschiedlich ist und dementsprechend auch das Aufbauverhalten, insbesondere der Gradient der Differenzdrehzahl.

Die Reaktion auf die berechnete Leistung, insbesondere der Gradient der Momentenabsenkung, kann auch steigungsabhängig erfolgen, also abhängig von einer Information über das aktuelle Befahren einer Steigung erfolgen, da die Achslastverteilung bei Befahren einer Steigung unterschiedlich ist und demzufolge auch das mögliche absetzbare Drehmoment.

Der Gradient der Reaktion, sowohl die Drehmomentreduzierung als auch die Drehmomenterhöhung, auf die berechnete Leistung und das Temperaturmodell ist bevorzugt abhängig von dem aktuell übertragbaren Drehmoment und dem Zielmoment der Reaktion (Delta-Torque) und dem aktuell anliegenden Belastungsgrad (Stresslevel). Das Delta-Torque ist das aktuelle absetzbare Drehmoment minus dem Zielmoment.

Bevorzugt wird ein Kennfeld für den Gradient der Momentenabsenkung und/oder Gradient der Momentenerhöhung verwendet, dessen x-Achse von dem Delta-Torque gebildet wird und dessen y-Achse vom Stresslevel (Belastungsgrad) gebildet wird. Dieser Gradient wird bevorzugt mit einem Faktor, abhängig von der Steigung, multipliziert. Vorteil dieser Berechnung ist, dass durch die indirekte Abhängigkeit vom Reibwert der Fahrbahn und dem Stresslevel, das Moment optimal abgesetzt werden kann, wodurch sich ein besseres Fahrverhalten (komfortabler, sportlicher) und bessere Performance des Fahrzeugs ergibt.

Bevorzugt wird auch fortlaufend zumindest eine Differenzdrehzahl am Differential überwacht, wobei falls die Differenzdrehzahl einen festgelegten Grenzwert überschreitet, das Antriebsmoment abgesenkt wird. Der Drehzahlpfad kann ein weiterer paralleler Zweig der Überwachung sein. Wenn eine Drehzahlschwelle überschritten wird, wird bevorzugt unabhängig vom Temperaturmodell und vom Leistungsmodell das Motormoment reduziert.

Vorzugsweise wird, wenn eine Absenkung des Antriebsmoments erfolgen soll, eine Information über die aktuelle Fahrbahnneigung, also Steigung der Fahrbahn, ermittelt und der Gradient der Absenkung des Antriebsmoments abhängig von der ermittelten Fahrbahnneigung bestimmt wird. Auch ein Erhöhen des Antriebsmoments, speziell der Gradient der Drehmomenterhöhung, insbesondere nach einem vorausgehenden Absenken des Antriebsmoments, kann abhängig von der aktuellen Fahrbahnneigung bestimmt werden, also abhängig vom aktuellen Befahren einer Steigung.

Bevorzugt erfolgt, wenn eine Absenkung des Antriebsmoments erfolgen soll, die Absenkung des Antriebsmoments abhängig davon, ob aktuell ein Allradbetrieb des Kraftfahrzeuges vorliegt. Im Allradbetrieb wird ein Teil des Drehmomentes (aktuell gestelltes Allradmoment) an die andere Achse (zum Beispiel Hinterachse) und somit nicht durch das Differential geleitet, wodurch am Differential weniger Energie eingetragen wird und somit die Grenzen der Schutzfunktion nicht oder später erreicht werden. Die Folgen des geringeren Energieeintrages sind eine bessere Fahrbarkeit bzw. besseres Systemverhalten in Folge von geringeren, reduzierten Regeleingriffen und ein besserer Bauteilschutz.

### Kurzbeschreibung der Zeichnungen

Die Erfindung wird im Folgenden beispielhaft unter Bezugnahme auf die Zeichnungen beschrieben.

Fig. 1a     ist eine Schnittansicht eines Differentials, für das ein erfindungsgemäßes Verfahren zum Schutz des Differentials durchgeführt werden kann.

Fig. 1b     ist eine seitliche Darstellung des Differential gemäß Fig. 1a, ohne Gehäuse.

Fig. 1c     ist eine Darstellung des Differential gemäß Fig. 1a von vorne.

Fig. 1d     ist eine Explosionsdarstellung des Differential gemäß Fig. 1a.

Fig. 2a     ist eine Darstellung des Differentials gemäß Fig. 1c von vorne und zeigt die Position des Ausschnitts Fig. 2b.

Fig. 2b     zeigt den Ausschnitt gemäß Fig. 2a.

Fig. 3      ist eine schematische Darstellung eines erfindungsgemäßen Verfahrens zum Schutz eines Differentials.

**Detaillierte Beschreibung der Erfindung**

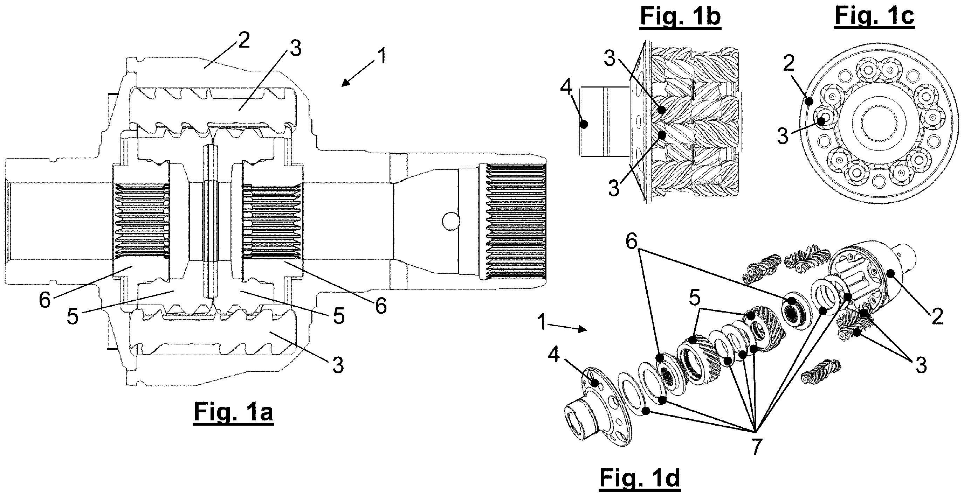

In den Fig. 1a bis Fig 1d ist beispielshaft ein Differential 1 dargestellt, für das ein erfindungsgemäßes Verfahren zum Schutz des Differentials durchgeführt werden kann.

Durch das Differential 1 kann ein Antriebsmoment auf zwei Abtriebe aufgeteilt werden. Das Antriebsmoment kann über das Gehäuse 2 des Differentials eingebracht werden, dass auch den Planetenträger für die Planetenräder 3 bildet. Über die Planetenräder 3 wird das Antriebsmoment an zwei Seitenräder 5 übertragen und von den Seitenrädern 5 wahlweise über zwei zugeordnete Kupplungen 6 auf links und rechts angeordnete Halbachsen übertragen werden (nicht dargestellt in Fig. 1a bis 1d), die radial innerhalb des Gehäuses 2 mit dessen Abdeckung 4 rotieren können. Axial zwischen den Kupplungen 6 und dem Gehäuse 2 bzw. der Abdeckung 4 sowie zwischen den Seitenrädern 5 sind Druckscheiben 7 angeordnet, beispielsweise aus Metall oder Metall-Polymer.

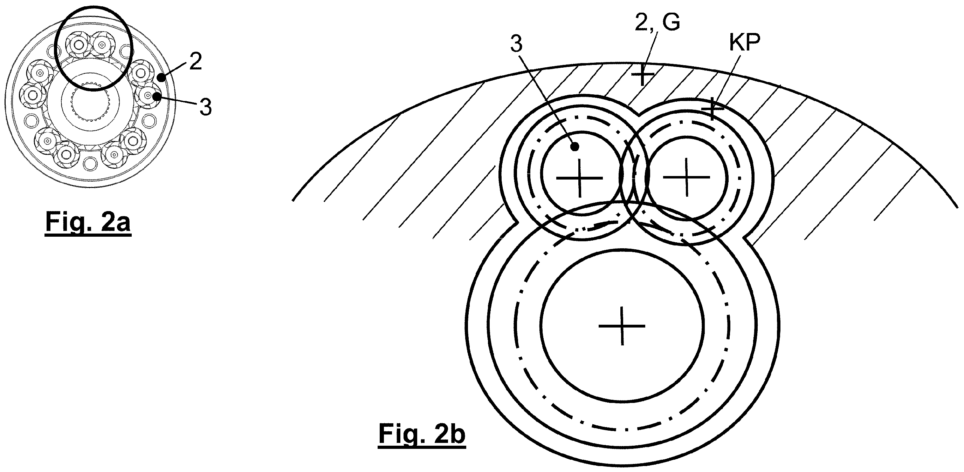

Die Fig. 2 zeigt die für die fortlaufende Berechnung von Temperaturen $T_{KP}$, $T_G$ am Differential 1 aus einem Temperaturmodell TM relevanten Bereiche am Differential 1. Dabei zeigt Fig. 2a eine mögliche Position des Ausschnitts Fig. 2b in einer Darstellung des Differentials von vorne, entsprechend Fig. 1c.

Die Temperatur wird einerseits am "kritischen Punkt" KP bestimmt, der einen Punkt unmittelbarer Entstehung von Reibwärme zwischen den rotierenden Planetenrädern 3 und dem diesen benachbarten Gehäuse 2 darstellt. Zusätzlich wird die Temperatur an einem Punkt G im Gehäuse 2 des Differentials 1 bestimmt.

Die kritische Temperatur am kritischen Punkt KP ist somit die Temperatur am Reibkontakt zwischen Planetenrädern 3 und Gehäuse 2. Dort kommt es primär zu einem Temperaturanstieg. Durch die Reibleistung an dem Reibkontakt wird Energie eingetragen, was zu einem Temperaturanstieg führt. Eine Abkühlung dieser Temperatur am kritischen Punkt KP erfolgt dadurch, dass die Wärme bzw. Energie an das Gehäuse 2, beispielsweise am Punkt G des Gehäuses 2, mit dessen vergleichsweise großen Masse, abgeleitet wird.

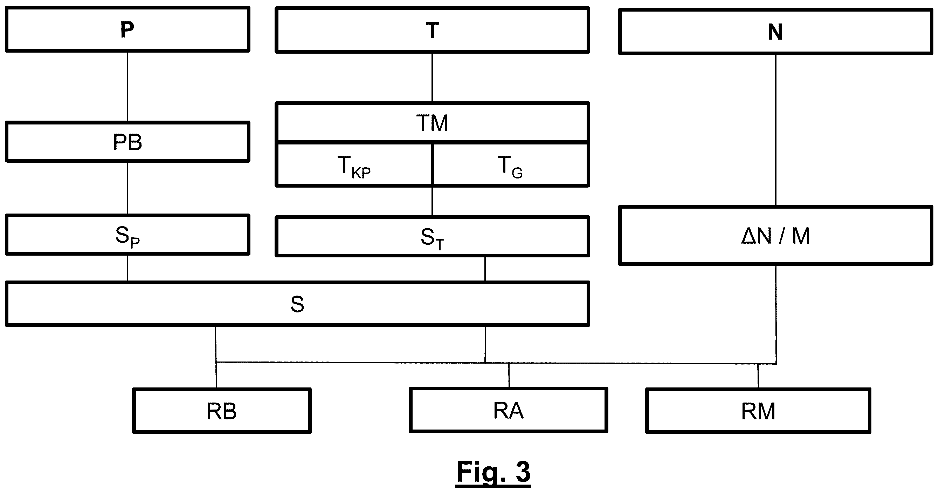

Fig. 3 zeigt schematisch ein erfindungsgemäßes Verfahren zum Schutz eines Differentials 1. Dabei kann auf verschiedene Weise eine Belastung S am Differential 1 berechnet werden, nämlich einerseits auf Basis der Temperatur T, durch eine Berechnung von Temperatureinträgen am kritischen Punkt $T_{KP}$ und am Gehäuse $T_G$ mit Hilfe eines Temperaturmodells TM, die zu einer Belastung durch Temperatur $S_T$ am kritischen Punkt KP führen. Parallel hierzu kann eine Ermittlung der Belastung S am Differential 1 auf Basis der Leistung P mit Hilfe einer Leistungsberechnung PB der am Differential 1 abfallenden Leistung P und der damit verbundenen Belastung durch Leistung Sp erfolgen.

Wenn die berechnete Belastung S am Differential 1 einen vorgegebenen Grenzwert überschreitet, kann eine geeignete Reaktion erfolgen, nämlich letztlich ein Absenken des Antriebsmoments am Differential 1, dass durch direktes Reduzieren des Moments eines Antriebsmotors RM erfolgen kann und/oder durch Zuschaltung eines Allradbetriebs RA und/oder durch einen Bremseingriff RB und / oder durch Zuschalten einer elektrisch angetriebenen Achse. Die elektrische Achse generiert Vortrieb ähnlich wie ein konventioneller Allradantrieb. Durch den zusätzlichen Vortrieb kann mehr Drehmoment an der Vorderachse übertragen werden bei gleichzeitig geringerer Differenzdrehzahl.

Unabhängig von der Berechnung der Belastung S auf Basis der Temperatur T und der Leistung P, können die selben Reaktionen, nämlich Reduzieren des Moments RM eines Antriebsmotors und/oder Zuschaltung eines Allradbetriebs RA und / oder durch Zuschalten einer elektrisch angetriebenen Achse und/oder Bremseingriff RB auch auf Basis der Verfolgung der Drehzahlen N am Differential erfolgen bzw. beeinflusst werden, nämlich durch eine Ermittlung einer Belastung durch die Differenzdrehzahl ΔN am Differential 1 in Relation zum aktuellen Antriebsmoment M am Differential 1.

Im Detail kann die Berechnung der Temperatur am kritischen Punkt $T_{KP}$ durch das Temperaturmodell mittels der folgenden Gleichung erfolgen:

$$T_{KP(n)} = T_{KP(n-1)} + \left( \frac{M * \Delta N * (AF * LE\%)}{X0} - C1 * \left( T_{KP(n-1)} - T_{G(n-1)} \right) \right) * \Delta t$$

Dabei ist:

$T_{KP}(n)$ die Temperatur am kritischen Punkt KP zum Zeitpunkt n $T_{KP}(n-1)$ die Temperatur am kritischen Punkt KP zum vorausliegenden Zeitpunkt n-1

$T_G(n-1)$ die Temperatur am Gehäuse G zum vorausliegenden Zeitpunkt n-1

M das Drehmoment, welches durch das Differential geleitet wird

C1 ein konstanter Faktor

$\Delta N$ die Differenzdrehzahl (an der Achse vom Differential)

LE% der Sperrwert

AF ein Anteilfaktor der ein erstes Kennfeld, nämlich Differenzdrehzahl über Drehmoment berücksichtigt und ein zweites Kennfeld, nämlich Temperatur am kritischen Punkt über Sumpföltemperatur. Die Ergebnisse aus dem ersten Kennfeld und dem zweiten Kennfeld werden multipliziert.

X0 eine Konstante (thermische Masse im kritischen Punkt)

$\Delta t$ die Zeitdifferenz zwischen Zeitpunkt n und Zeitpunkt n-1

Die Temperatur $T_G$ am Gehäuse G, 2 kann einen Temperaturanstieg erfahren, wobei durch die große Masse am Gehäuse G die Wärme bzw. Energie von der Reibkontaktstelle KP "schnell" in das Gehäuse G abgeleitet wird. Dabei steigt die Temperatur $T_G$ des Gehäuses an. Die Temperatur $T_G$ am Gehäuse G, 2 wird reduziert, indem Wärme / Energie durch die große Oberfläche des Gehäuses G,2 an das Restsystem übertragen wird.

Die Berechnung der Temperatur $T_G$ am Gehäuse kann erfolgen durch die Formel:

$$T_{G(n)} = T_{G(n-1)} + \left( C2 * \left( T_{KP(n-1)} - T_{G(n-1)} \right) - F(N_{RG}; \Delta N; CCP\_Vol) * \left( T_{G(n-1)} - T_{O(n-1)} \right) \right) * \Delta t$$

Dabei ist:

$T_G(n)$ die Temperatur am Gehäuse G zum Zeitpunkt n

$T_G(n-1)$ die Temperatur am Gehäuse G zum vorausliegenden Zeitpunkt n-1

$T_{KP}(n-1)$ die Temperatur am kritischen Punkt KP zum vorausliegenden Zeitpunkt n-1

$T_O(n-1)$ die Ölsumpftemperatur zum vorausliegenden Zeitpunkt n-1

$N_{RG}$ die Drehzahl am Ringrad

$\Delta N$ die Differenzdrehzahl

CCP_Vol der Kühlölvolumenstrom

$F(N_{RG}; \Delta N; CCP\_Vol)$ ein Wert aus einem Kennfeld mit den Achsen Drehzahl am Ringrad, Differenzdrehzahl der multipliziert wird mit dem Kühlölvolumenstrom.

Die Drehzahl am Ringrad $N_{RG}$ hat einen direkten Einfluss auf das Abkühlverhalten, nämlich die Abkühlgeschwindigkeit.

C2 ist ein konstanter Faktor

$T_{Oil}$ die Ölsumpftemperatur

Die Berechnung der Leistung P kann durch folgende Gleichung erfolgen:

$$P(t) = Tq_{whl}(t) * \Delta N(t) * TBR(\%)$$

Dabei ist:

$Tq_{wh1}$ das Drehmoment an den angetriebenen Rädern durch das Differential

TBR(%) die Torque Bias Ratio

$\Delta N$ die Differenzdrehzahl

Jeweils zu einem Zeitpunkt t.

Für die Drehzahlberechnung N gilt: der Drehzahlpfad N ist unabhängig vom Leitungs- und Temperaturpfad P, T bzw. allgemein von der Ermittlung der Belastung S. Zum Beispiel wird bei aktiver Belastung S und sehr hoher Differenzdrehzahl $\Delta N$ das Moment durch den Drehzahlschutz weiter reduziert, durch Reduzieren des Moments RM eines Antriebsmotors und/oder Zuschaltung eines Allradbetriebs RA und/oder Bremseingriff RB.

Die Ermittlung am Drehzahlpfad N basiert auf der Ermittlung eines Kennwertes aus einem Kennfeld, nämlich der Drehzahldifferenz über dem Drehmoment $\Delta N/M$. Ab einer bestimmten Schwelle der Differenzdrehzahl $\Delta N$ wird bevorzugt das Motormoment um einen Faktor reduziert RM. Bei einer Reduzierung der Differenzdrehzahl $\Delta N$ wird das Drehmoment anlog dem Kennfeld $\Delta N/M$ wieder erhöht.

Generell können unterschiedliche Grenzwerte für die Belastung S und unterschiedlich starke Reaktionen, nämlich Reduzieren des Moments RM eines Antriebsmotors und/oder Zuschaltung eines Allradbetriebs RA und/oder Bremseingriff RB, abhängig von der aktuellen Steigung, also der Fahrbahnneigung, gesetzt werden.

Bezugszeichenliste

| | |
|---|---|
| 1 | Differential |
| 2 | Gehäuse |
| 3 | Planetenrad |
| 4 | Abdeckung |
| 5 | Seitenrad |
| 6 | Kupplung |
| 7 | Druckscheibe |

| | |
|---|---|
| T | Temperatur |
| TM | Temperaturmodell |
| $T_{KP}$ | Temperatur am kritischen Punkt |
| $T_G$ | Temperatur im Gehäuse |
| P | Leistung |
| PB | Leistungsberechnung |
| N | Drehzahl |
| $\Delta N$ | Differenzdrehzahl |
| M | Antriebsmoment |
| S | Belastung |
| $S_T$ | Belastung durch Temperatur |
| Sp | Belastung durch Leistung |

| | |
|---|---|
| RM | Reduzieren des Moments eines Antriebsmotors |
| RA | Zuschaltung eines Allradbetriebs |
| RB | Bremseingriff |

**Patentansprüche**

1. Verfahren zum Schutz eines Differentials (1) eines Kraftfahrzeuges, wobei durch das Differential (1) ein Antriebsmoment auf zwei Abtriebe aufgeteilt wird,
**dadurch gekennzeichnet, dass** fortlaufend zumindest eine Temperatur ($T_{KP}$, $T_G$) am Differential (1) aus einem Temperaturmodell (TM) berechnet wird, wobei falls die berechnete Temperatur ($T_{KP}$, $T_G$) einen festgelegten Grenzwert überschreitet, das Antriebsmoment abgesenkt wird.

2. Verfahren nach Anspruch 1,
**dadurch gekennzeichnet, dass** die fortlaufende Berechnung zumindest einer Temperatur ($T_{KP}$, $T_G$) am Differential (1) aus einem Temperaturmodell (TM) die fortlaufende Berechnung einer Temperatur ($T_{KP}$) an einem Reibkontakt von Differential-Zahnrädern, insbesondere von Planetenrädern (3), zum Gehäuse (2) des Differentials (1) umfasst.

3. Verfahren nach zumindest einem der vorhergehenden Ansprüche, **dadurch gekennzeichnet, dass** die fortlaufende Berechnung zumindest einer Temperatur ($T_{KP}$, $T_G$) am Differential (1) aus einem Temperaturmodell (TM) die fortlaufende Berechnung einer Temperatur ($T_G$) am Gehäuse (2) des Differentials (1) umfasst.

**4.** Verfahren nach Anspruch 2 und Anspruch 3,
**dadurch gekennzeichnet , dass** die aktuelle Berechnung der Temperatur ($T_{KP}$) an einem Reibkontakt von Differential-Zahnrädern, insbesondere von Planetenrädern (3), zum Gehäuse (2) des Differentials (1), abhängig von der zuletzt berechneten Temperatur ($T_G$) am Gehäuse (2) des Differentials (1) durchgeführt wird, und/oder dass die aktuelle Berechnung der Temperatur ($T_G$) am Gehäuse (2) des Differentials (1), abhängig von der zuletzt berechneten Temperatur ($T_{KP}$) an einem Reibkontakt von Differential-Zahnrädern, insbesondere von Planetenrädern (3), zum Gehäuse (2) des Differentials (1) durchgeführt wird.

**5.** Verfahren nach zumindest einem der vorhergehenden Ansprüche, **dadurch gekennzeichnet , dass** fortlaufend zumindest eine Leistung (P) am Differential (1) aus einem Leistungsmodell (PM) berechnet wird, wobei falls die berechnete Leistung (P) einen Grenzwert überschreitet, das Antriebsmoment abgesenkt wird, wobei bevorzugt der Grenzwert steigungsabhängig und/oder zeitabhängig ist.

**6.** Verfahren nach zumindest einem der vorhergehenden Ansprüche, **dadurch gekennzeichnet, dass** fortlaufend zumindest eine Differenzdrehzahl ($\Delta N$) am Differential (1) überwacht wird, wobei falls die Differenzdrehzahl ($\Delta N$) einen festgelegten Grenzwert überschreitet, das Antriebsmoment abgesenkt wird.

**7.** Verfahren nach zumindest einem der vorhergehenden Ansprüche, **dadurch gekennzeichnet, dass** das Absenken des Antriebsmoments erfolgt durch Reduzieren des Moments eines Antriebsmotors RM und/oder durch Zuschaltung eines Allradbetriebs RA und / oder durch Zuschalten einer elektrisch angetriebenen Achse und/oder durch einen Bremseingriff RB.

**8.** Verfahren nach zumindest einem der vorhergehenden Ansprüche, **dadurch gekennzeichnet, dass**, wenn eine Absenkung des Antriebsmoments erfolgen soll, eine Information über die aktuelle Fahrbahnneigung ermittelt wird und die Absenkung des Antriebsmoments abhängig von der ermittelten Fahrbahnneigung erfolgt.

**9.** Verfahren nach zumindest einem der vorhergehenden Ansprüche, **dadurch gekennzeichnet, dass**, wenn eine Absenkung des Antriebsmoments erfolgen soll, die Absenkung des Antriebsmoments abhängig davon erfolgt, ob aktuell ein Allradbetrieb des Kraftfahrzeuges vorliegt.

**Fig. 1a**

**Fig. 1b**

**Fig. 1c**

**Fig. 1d**

EP 4 148 300 A1

**Fig. 2a**

**Fig. 2b**

3    2, G    KP

EP 4 148 300 A1

| P | T | N |
|---|---|---|

| PB | | |
|---|---|---|

| | TM | |
|---|---|---|
| | $T_{KP}$ | $T_G$ |

| $S_P$ | $S_T$ | $\Delta N \, / \, M$ |
|---|---|---|

| S |
|---|

| RB | RA | RM |
|---|---|---|

**Fig. 3**

Europäisches
Patentamt

European
Patent Office

Office européen
des brevets

**EUROPÄISCHER RECHERCHENBERICHT**

Nummer der Anmeldung

EP 22 19 3044

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2004 002761 A1 (DAIMLER CHRYSLER AG [DE]) 11. August 2005 (2005-08-11) | 1 | INV. F16H48/00 B60K23/04 |
| Y | * Absätze [0003], [0005], [0006]; | 1-3,7 | |
| A | Abbildungen 1, 2 * | 4-6,8,9 | |
| | ----- | | |
| Y | DE 33 19 523 A1 (DAIMLER BENZ AG [DE]) 29. November 1984 (1984-11-29) | 1-3,7 | |
| A | * Abbildungen 1, 2 * | 4-6,8,9 | |
| | ----- | | |

RECHERCHIERTE
SACHGEBIETE (IPC)

F16H
B60K

Der vorliegende Recherchenbericht wurde für alle Patentansprüche erstellt

| Recherchenort | Abschlußdatum der Recherche | Prüfer |
|---|---|---|
| München | 25. Januar 2023 | Szodfridt, Tamas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 19 3044

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-01-2023

| Im Recherchenbericht angeführtes Patentdokument | Datum der Veröffentlichung | Mitglied(er) der Patentfamilie | Datum der Veröffentlichung |
|---|---|---|---|
| DE 102004002761 A1 | 11-08-2005 | DE 102004002761 A1 | 11-08-2005 |
| | | EP 1706303 A1 | 04-10-2006 |
| | | JP 2007518915 A | 12-07-2007 |
| | | US 2006155452 A1 | 13-07-2006 |
| | | WO 2005068242 A1 | 28-07-2005 |
| DE 3319523 A1 | 29-11-1984 | KEINE | |

Für nähere Einzelheiten zu diesem Anhang : siehe Amtsblatt des Europäischen Patentamts, Nr.12/82

EPO FORM P0461